Europäisches Patentamt

European Patent Office

Office européen des brevets

(19)

(11) Numéro de publication: **0 0 1 2 6 5 8**
**B1**

(12) **FASCICULE DE BREVET EUROPEEN**

(45) Date de publication du fascicule du brevet:
01.12.82

(51) Int. Cl.³: **C 02 F 3/30, C 02 F 3/04**

(21) Numéro de dépôt: 79400949.8

(22) Date.de dépôt: 03.12.79

(54) Procédé de traitement biologique d'un effluent liquide sur lit de matière adsorbante.

(30) Priorité: 07.12.78 FR 7834490

(43) Date de publication de la demande:
25.06.80 Bulletin 80/13

(45) Mention de la délivrance du brevet:
01.12.82 Bulletin 82/48

(84) Etats contractants désignés:
BE DE GB NL

(56) Documents cités:
DE-A-2 002 926
DE-A-2 550 818
FR-A-2 190 744
GB-A-799 826

(73) Titulaire: Société Anonyme D'etudes de recherches et
de productions d'agents chimiques - E.R.P.A.C., 9, rue
Auguste Barbier, F-75011 Paris (FR)

(72) Inventeur: Treyssac, Georges, 10, rue Racine,
F-59700 Marcq en Baroeul (FR)

(74) Mandataire: Kedinger, Jean-Paul et al, c/o Cabinet
Malemont 42, avenue du Président Wilson, F-75116 Paris
(FR)

Procédé de traitement biologique d'un effluent liquide sur lit de matière absorbante

La présente invention a pour objet un procédé de traitement d'un effluent liquide, comme une eau usée par exemple, contenant des matières organiques biodégradables en dissolution et/ou en suspension qui consiste à filtrer cet effluent sur une matière adsorbante ensemencée en flore microbienne, et sur laquelle lesdites matières organiques sont progressivement adsorbées en plateaux successifs.

Dans le procédé connu de ce type décrit dans la demande de brevet français 2 190 744 et qui utilise une pluralité de lits adsorbants disposés en série, les matières organiques polluantes ont tendance à se répartir progressivement sur la matière adsorbante selon leur facilité d'adsorption, définissant ainsi, dans chaque lit, des zones ou plateaux superposés, le nombre total de ces zones ou plateaux dans l'ensemble des lits étant égal à celui desdites matières organiques (phénomène analogue à la séparation par distillation à plateaux multiples). La première zone ou le premier plateau est essentiellement chargé en la matière organique la plus facilement adsorbée et la dernière zone ou le dernier plateau est chargé en la matière organique la moins facilement adsorbée.

Les molécules organiques se fixent donc sur les sites d'adsorption de la matière adsorbante selon leur facilité d'adsorption et sont fractionnées par les enzymes sécrétées par la flore microbienne d'ensemencement. Les fractions résultantes, moins facilement adsorbées sur la matière adsorbante, sont remplacées par de nouvelles molécules de matières organiques, éluées, puis ingérées par la flore microbienne présente dans les pores de la matière adsorbante et/ou dans les espaces intergranulaires de cette dernière.

Dans ces conditions, il y a au niveau de chaque plateau développement d'une flore microbienne qui tend à devenir à la longue spécifique de la dégradation de la matière organique prépondérante sur ce plateau et corrélativement étouffement des autres flores microbiennes. Il y a simultanément, du fait du développement de la flore microbienne, au niveau de chacun des plateaux, production de boues biologiques qui conduisent progressivement au colmatage de la matière adsorbante. Ce colmatage se produit préférentiellement au niveau du premier plateau.

Il s'ensuit qu'il est nécessaire de procéder très fréquemment au lavage de toute la matière adsorbante correspondant au lit contenant ce premier plateau, alors qu'une fraction seulement de celle-ci est colmatée. Ceci entraîne des pertes de temps importantes.

En outre, ce lavage provoque généralement un brassage de la matière adsorbante et le mélange des flores microbiennes spécifiques qui ont commencé à se développer sur celle-ci. Lorsque l'effluent est remis à circuler sur la colonne, il va se reproduire le phénomène de sélection progressive des flores microbiennes spécifiques. Ce redémarrage de la sélection après chaque lavage a pour conséquence d'abaisser fortement la capacité et le rendement de l'opération par rapport à ce qu'ils étaient juste avant le lavage ou ce qu'ils auraient pu devenir s'il n'avait pas été nécessaire de laver. Considérés globalement sur plusieurs cycles dégradation-lavage, la capacité et le rendement de l'épuration sont donc peu élevés et ne peuvent atteindre leur optimum.

Un inconvénient identique à celui qui vient d'être présenté se rencontre également dans le procédé décrit dans le brevet britannique n° 799 826, procédé dans lequel un effluent circule à travers une série de tours, la surface intérieure de chacune de ces tours étant tapissée de plusieurs familles de bactéries différentes agissant chacune sur des ingrédients spécifiques de l'effluent à traiter.

Le but de la présente invention est précisément de remédier à ces inconvénients et, pour ce faire, elle propose un procédé qui se caractérise en ce que la matière adsorbante se présente sous la forme d'autant de lits indépendants qu'il y a de plateaux, ces lits étant disposés en série.

Dans ces conditions, lorsqu'il y aura colmatage par les boues microbiennes de l'un quelconque des lits de matière adsorbante, il suffira de procéder au lavage de ce seul lit, ce qui peut être fait en un temps très court par rapport à celui nécessaire dans les procédés connus et ce, compte tenu de la faible quantité de matière adsorbante à laver. D'une manière plus générale, le procédé selon l'invention permet de réduire la fréquence de lavage en fonction réellement des quantités de boues biologiques produites au niveau de chaque plateau.

Par ailleurs, le lavage de la matière adsorbante se faisant indépendamment plateau par plateau, il n'y a plus mélange des différentes flores microbiennes spécifiques et donc plus possibilité d'étouffement de l'une par l'autre et nécessité de recommencer la sélection des flores microbiennes spécifiques. On comprendra qu'il est ainsi possible non seulement de maintenir mais encore de développer progressivement et de plus en plus rapidement sur chaque plateau la flore microbienne spécifique à la matière organique présente au niveau de ce plateau. Il s'ensuit une augmentation progressive de la capacité de dégradation biologique au niveau de chaque plateau et donc une augmentation progressive du rendement global de l'opération d'épuration. Il est à noter que par mise en œuvre du procédé selon l'invention, il est possible de traiter des effluents liquides tout en valorisant les matières organiques contenues dans ces effluents par le développement et donc la production de flores microbiennes spécifiques. On pourra ainsi produire tout un arsenal de flores microbiennes spécifiques dans lequel on choisira selon les besoins la flore microbienne spécifique à la dégradation d'une matière organique déterminée. En outre, cet arsenal de flores microbiennes spécifiques constituera un réservoir de protéines spécifiques.

Selon les nécessités, tout ou partie des lits de matière adsorbante peuvent fonctionner en aérobiose, les lits subsistants fonctionnant alors en anaérobiose et inversement, tout ou partie des lits peuvent fonctionner en anaérobiose auquel cas les lits restants fonctionneront en aérobiose. Bien entendu, avant mise en circulation de l'effluent à traiter, les lits destinés à fonctionner en aérobiose sont ensemencés en flore microbienne anaérobie. En effet, dans la pratique il sera souvent nécessaire de combiner le processus aérobie avec le processus anaérobie car certaines des matières organiques de l'effluent seront plus facilement dégradables par voie aérobie tandis que d'autres le seront plus facilement par voie anaérobie.

A ce propos, il est à noter qu'il sera possible de produire au niveau des lits fonctionnant en anaérobiose du méthane avec des rendements élevés, ce qui est une manière supplémentaire de valoriser les matières organiques de l'effluent. Avantageusement, tout ou partie des lits fonctionnant en anaérobiose peuvent être divisés chacun en deux lits, le premier de ces deux lits étant le siège du processus d'acidification et le second le siège du processus de méthanisation, cette séparation de la phase d'acidification et de la phase de production de méthane ayant pour effet d'accélérer la biodégradation de manière importante.

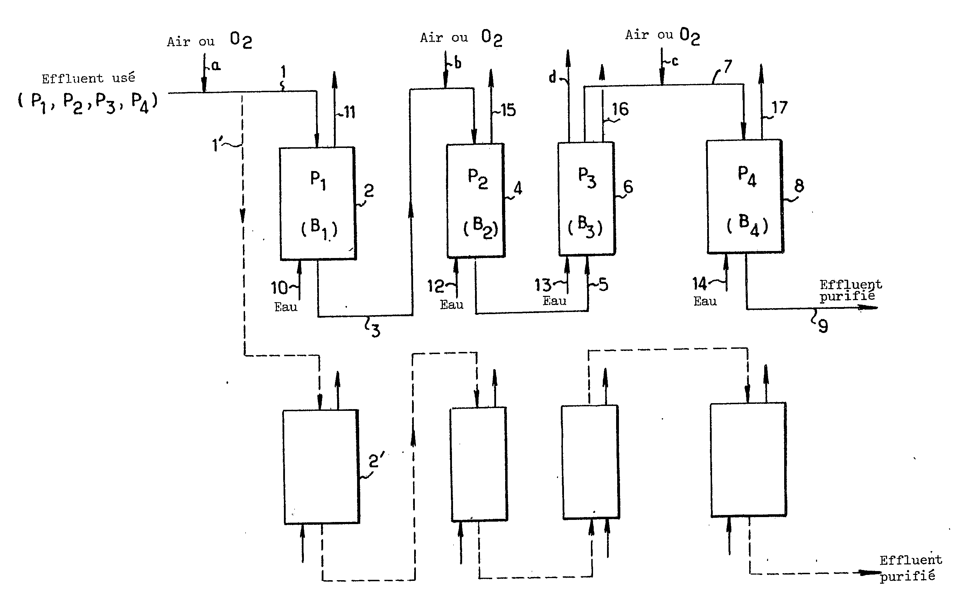

Une forme d'exécution de la présente invention est décrite ci-après à titre d'exemple, en référence au dessin annexé dans lequel la figure unique est une représentation schématique d'une installation dans laquelle est mise en œuvre le procédé revendiqué.

L'effluent à traiter qui est dans le cas présent un effluent usé contenant en dissolution et/ou en suspension des matières organiques $P_1$, $P_2$, $P_3$ et $P_4$ est amené par le conduit 1 au sommet d'un réservoir 2. L'effluent sortant à la base de ce réservoir 2 est ensuite amené par un conduit 3 au sommet d'un réservoir 4, puis de la base de ce dernier par un conduit 5 à la base d'un réservoir 6 et enfin du sommet de ce dernier par un conduit 7 au sommet du réservoir 8. L'effluent purifié sortant à la base du réservoir 8 est ensuite évacué par un conduit 9. Les réservoirs 2, 4, 6 et 8 sont remplis de charbon actif sur lequel est fixée une flore bactérienne.

Les quantités de charbon actif disposé dans chacun de ces réservoirs et le pouvoir adsorbant de celui-ci sont choisis de manière à ce que les matières organiques $P_1$, $P_2$, $P_3$ et $P_4$ se répartissent progressivement dans les quatre réservoirs 2, 4, 6, 8, de telle sorte que le charbon actif du réservoir 2 adsorbe essentiellement $P_1$, celui de réservoir 4 essentiellement $P_2$, celui du réservoir 6 essentiellement $P_3$ et celui du réservoir 8 essentiellement $P_4$.

Selon que les matières organiques polluantes $P_1$, $P_2$, $P_3$ et $P_4$ sont plus facilement dégradées en aérobiose ou en anaérobiose, on opérera en présence d'air dans les réservoirs contenant une matière organique plus facilement dégradable selon un processus aérobie et en l'absence d'air dans les réservoirs contenant une matière plus facilement dégradable selon un processus anaérobie. Dans le cas de la figure annexée, où la dégradation de $P_1$, $P_2$, et $P_4$ est effectuée par voie aérobie, des arrivées d'air ou d'oxygène a, b, c sont prévues respectivement sur les conduits 1, 3, 7. Toujours dans le cas de la figure annexée, la dégradation de $P_3$ est effectuée par voie anaérobie et il y aura dans ces conditions formation d'un gaz riche en méthane évacué à la partie haute du réservoir au moyen d'un conduit d.

Dans chacun des réservoirs 2, 4, 6 et 8 va donc se développer de plus en plus rapidement la flore bactérienne spécifique pour la dégradation de la matière organique qui s'y trouve de manière prépondérante. Ainsi, dans les réservoirs 2, 4, 6 et 8 vont se développer respectivement les flores bactériennes $B_1$, $B_2$, $B_3$, $B_4$ spécifiques respectivement de la dégradation de $P_1$, $P_2$, $P_3$ et $P_4$.

La quantité des bactéries spécifiques augmentant continuellement, le rendement de la dégradation au sein de chaque réservoir va en croissant.

Au bout d'un certain temps de circulation de l'effluent usé, il se produit un colmatage du charbon actif du réservoir 2 par les boues bactériennes créées par la dégradation de $P_1$. Il est alors nécessaire d'arrêter l'arrivée d'effluent usé et de procéder au lavage de ce réservoir 2 en injectant de l'eau à la base du réservoir 2 par un conduit 10, cette eau chargée de boues bactériennes étant éliminée à la partie supérieure par un conduit 11. Les réservoirs 4, 6 et 8 sont eux également pourvus respectivement de conduits d'arrivée d'eau de lavage 12, 13, 14 et respectivement de conduits d'évacuation d'eau chargée de boues bactériennes 15, 16, 17. Plutôt que d'arrêter l'épuration de l'effluent, on préfère par exemple, et c'est ce qui est représenté sur le dessin, dériver l'effluent usé par un conduit 1' pour l'amener au sommet du premier réservoir 2' appartenant à une installation d'épuration en tout point identique à celle qui vient d'être décrite. Dans ces conditions, on envoie l'effluent usé soit en tête du réservoir 2, soit en tête du réservoir 2' selon qu'il est nécessaire de procéder au décolmatage par lavage d'un réservoir de la première installation ou de la seconde installation.

Il est à noter que la flore bactérienne peut être déposée sur le charbon actif de chaque réservoir en faisant circuler sur celui-ci pendant une certaine durée, avant passage de l'effluent usé, un fluide riche en bactéries. De préférence, on déposera sur le charbon actif de chaque réservoir, la flore bactérienne spécifique $B_1$, $B_2$, $B_3$ ou $B_4$ correspondant à ce réservoir, les flores $B_1$, $B_2$, $B_3$ et $B_4$ provenant, par exemple, d'une autre installation d'épuration.

Par ailleurs, quand dans un réservoir il y a production importante de gaz, il est préférable, pour éviter que les gaz formés empêchent la circulation régulière de l'effluent, de prévoir un courant ascendant de ce dernier dans le réservoir considéré, c'est ce qui est préconisé au niveau du réservoir 6, ainsi qu'un ensemble de séparation gaz-liquide.

Il est possible également au niveau du réservoir 6 de séparer la phase d'acidification et la phase de méthanisation. En outre, dans l'installation décrite ci-dessus, la flore bactérienne a été choisie à titre de flore microbienne. Il est bien certain que selon la nature de $P_1$, $P_2$, $P_3$ et $P_4$, on pourra choisir un autre type de flore microbienne tel que moisissures, levures, etc...

Afin de montrer le progrès technique considérable apporté par la présente invention, on comparera ci-après les performances d'épuration des procédés de l'art antérieur à celles du procédé revendiqué, les effluents traités étant des effluents provenant de laiteries ou d'usines de conserve de viandes.

Ainsi, dans le traitement classique par boues activées (processus aérobie), l'abattement de pollution est de 0,3 à 3 kg de DBO5/jour/m3 de colonne filtrante et la consommation d'oxygène est de 1 à 1,2 kg d'oxygène par kg de DBO5, alors que dans le traitement selon le procédé revendiqué, l'abattement de pollution peut atteindre 50 fois celui obtenu au moyen des boues activées avec une moyenne d'environ 50 à 100 kg de DBO5/jour/m3 de colonne filtrante, la consommation d'oxygène étant divisée par 100 (limite de l'anaérobiose). De plus, la production de boues est divisée par 10 par rapport aux procédés habituels.

De même, dans les traitements anaérobie classiques, l'abattement de pollution exprimé en DBO5 dépasse rarement 0,3 kg/jour/m3 de colonne filtrante, alors que par mise en œuvre du procédé selon l'invention, il est possible d'atteindre des abattements de pollution de l'ordre de 50 kg de DBO5/jour/m3 de colonnes filtrantes. Par ailleurs, les temps de séjour qui vont de 4 à 30 jours dans les procédés connus, sont réduits jusqu'à à peine quelques heures. La production de méthane est au moins équivalente à ce qu'elle est dans les procédés classiques et il est possible d'abaisser la température de traitement d'au moins 10 °C.

## Revendications

1. Procédé de traitement d'un effluent liquide, comme une eau résiduaire, contenant des matières organiques biodégradables en dissolution et/ ou en suspension qui consiste à faire circuler cet effluent sur une matière adsorbante ensemencée préalablement en flore microbienne et sur laquelle lesdites matières organiques se répartissent selon leur facilité d'adsorption en définissant ainsi des plateaux successifs, caractérisé en ce que la matière adsorbante se présente sous la forme d'autant de lits indépendants qu'il y a de plateaux, ces lits étant disposés en série.

2. Procédé selon la revendication 1, caractérisé en ce que lorsque l'un des lits est colmaté par les boues microbiennes produites au cours de la dégradation, on procède au lavage de ce lit indépendamment des autres.

3. Procédé selon l'une quelconque des revendications 1 et 2, caractérisé en ce que tout ou partie des lits fonctionne en aérobiose, les lits subsistants fonctionnant alors en anaérobiose et inversement en ce que tout ou partie des lits fonctionne en anaérobiose auquel cas les lits subsistants fonctionnent en aérobiose.

4. Procédé selon l'une quelconque des revendications 1 à 3, caractérisé en ce que chaque lit est ensemencé préalablement en flore microbienne spécifique de la matière organique adsorbée, les lits fonctionnant en aérobiose étant ensemencés en flore microbienne du type aérobie et les lits fonctionnant en anaérobiose étant ensemencés en flore microbienne du type anaérobie.

5. Procédé selon l'une quelconque des revendications précédentes, caractérisé en ce que la matière adsorbante est le charbon actif.

## Claims

1. A process for treating a liquid effluent, such as waste water, containing biodegradable organic materials in dissolution and/or in suspension, which consists in causing this effluent to flow over an adsorbent material previously seeded with microbian flora and on which said organic materials are distributed according to their ease of adsorption while thus defining successive plates, characterized in that the adsorbent material is in the form of as many independent beds as there are plates, these beds being disposed in series.

2. The process according to claim 1, characterized in that, when one of the beds in clogged with the microbian sludges produced during degradation, this bed is washed independently of the others.

3. The process according to any one of claims 1 and 2, characterized in that all or part of the beds operates in aerobiosis, in which case the remaining beds operate in anaerobiosis and conversely in that all or part of the beds operates in anaerobiosis, in which case the remaining beds operate in aerobiosis.

4. The process according to any one of claims 1 to 3, characerized in that each bed is previously seeded with microbian flora specific to the adsorbed organic material, the beds operating in aerobiosis being seed with microbian flora of the aerobic type and the beds operating in anaerobiosis being seed with microbian flora of the anaerobic type.

5. The process according to any one of the preceding claims, characterized in that the adsorbent material is active carbon.

## Patentansprüche

1. Verfahren zur Behandlung eines flüssigen, biologisch abbaubare, organische Materialien in Lösung und/oder in Suspension enthaltenden Abstroms, wie eines Abwassers, das darin besteht, dass man diesen Abstrom über ein zuvor mit Mikrobenflora beimpftes adsorbierendes Material zirkulieren lässt, über das sich die organischen Materialien gemäss ihrem Adsorptionsvermögen verteilen, wobei sie so aufeinanderfolgende Flächen festlegen, dadurch gekennzeichnet, dass sich das adsorbierende Material in Form ebenso vieler unabhängiger Betten wie Flächen darbietet, wobei diese Betten in Reihe angeordnet sind.

2. Verfahren nach Anspruch 1, dadurch gekennzeichnet, dass man, wenn eines der Betten durch den im Verlauf des Abbaus erzeugten Mikrobenschlamm kolmatiert ist, dieses Bett unabhängig von den anderen wäscht.

3. Verfahren nach einem der Ansprüche 1 und 2, dadurch gekennzeichnet, dass alle oder ein Teil der Betten aerob arbeiten, die weiteren Betten dann anaerob arbeiten und dass umgekehrt alle oder ein Teil der Betten anaerob arbeiten, wobei dann die weiteren Betten aerob arbeiten.

4. Verfahren nach einem der Ansprüche 1 bis 3, dadurch gekennzeichnet, dass jedes Bett zuvor mit einer für das adsorbierte organische Material spezifischen Mikrobenflora beimpft wird, wobei die aerob arbeitenden Betten mit einer Mikrobenflora des aeroben Typs beimpft werden und die anaerob arbeitenden Betten mit einer Mikrobenflora des anaeroben Typs beimpf werden.

5. Verfahren nach einem der vorhergehenden Ansprüche, dadurch gekennzeichnet, dass das adsorbierende Material Aktivkohle ist.